(19)

**Europäisches Patentamt**
**European Patent Office**
**Office européen des brevets**

(11) **EP 4 667 657 A1**

(12) **EUROPÄISCHE PATENTANMELDUNG**

(43) Veröffentlichungstag:
**24.12.2025 Patentblatt 2025/52**

(21) Anmeldenummer: **24182579.3**

(22) Anmeldetag: **17.06.2024**

(51) Internationale Patentklassifikation (IPC):
**E01C 19/48** (2006.01)

(52) Gemeinsame Patentklassifikation (CPC):
**E01C 19/004; E01C 19/48;** G01B 11/245

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **MOBA Mobile Automation AG**
**65555 Limburg (DE)**

(72) Erfinder:
- **HORN, Alfons**
  **65555 Limburg (DE)**
- **ZARNIKO, Martin**
  **65555 Limburg (DE)**
- **STILLER, Jürgen**
  **65555 Limburg (DE)**

(74) Vertreter: **Pfitzner, Hannes**
**Schoppe, Zimmermann, Stöckeler**
**Zinkler, Schenk & Partner mbB**
**Patentanwälte**
**Radlkoferstraße 2**
**81373 München (DE)**

(54) **VERFAHREN UND VORRICHTUNG ZUR NIVELLIERUNG EINER STRASSE**

(57) Nivelliersystem für einen Straßenfertiger (1) mit einer Bohle (10), umfassend: ein Messsystem (30); sowie eine Steuerung; wobei das Messsystem (30) einen ersten und einen zweiten Sensor aufweist, wobei der erste Sensor (34a) in Fahrtrichtung vor dem zweiten Sensor (34b) angeordnet ist und ausgebildet ist, um einen ersten Abstand von dem ersten Sensor (34a) zu einem weiteren Untergrund oder Oberfläche mit einem um einen Versatz (V) versetzten Höhenniveau zu messen, um einen ersten Höhenwert zu erhalten; und wobei der zweite Sensor (34b) in Fahrtrichtung vor der Bohle (10) des Straßenfertigers (1) angeordnet ist und ausgebildet ist, einen zweiten Abstand von dem zweiten Sensor (34b) zu einem Untergrund der Baumaschine oder einer Referenz der Baumaschine zu messen, um einen zweiten Höhenwert zu erhalten; wobei die Steuerung ausgebildet ist, um ausgehend von dem ersten Höhenwert und dem zweiten Höhenwert durch Differenzbildung den Versatz (V) zu bestimmen, wobei die Steuerung ferner ausgebildet ist, um auf Basis des Versatzes (V) einen Sollwert für einen Angleich zu bestimmen; wobei die Steuerung ausgebildet ist, die Bohle (10) in Abhängigkeit des Sollwerts zu steuern.

Fig. 1B

Die Schichtdicke $h_F$ ergibt sich aus der Differenz der beide vorderen Sensoren unter der Berücksichtigung einer Ausgleichsgeraden

Fig. 1C

Schichtdickenmessung
Bohlenhinterkante $h_B$

Schichtdickenmessung
Super-Ski
Frontseite $h_F$

Brückenübergang

Angleichsdistanz

Sollwert für Höhenregelung $h_{Bsoll} = h_F + $ Walzmaß

Fig. 1A

EP 4 667 657 A1

**Beschreibung**

Ausführungsbeispiele der vorliegenden Erfindung beziehen sich auf ein Nivelliersystem sowie ein entsprechendes Verfahren. Bevorzugte Ausführungsbeispiele beziehen sich auf ein Verfahren und eine Vorrichtung zum Schichtdickenangleich, insbesondere dem autonomen Schichtdickenangleich, z. B. bei Brückenbauten oder bei der Reparatur.

Bei Brückenbauten kommt es häufig zu der Problematik, dass aufgrund des wechselnden Untergrunds am Übergang zur Brücke ein Versatz des Untergrunds besteht. So kann beispielsweise der Untergrund vor der Brücke im Vergleich zu dem weiteren Untergrund der Brücke ein anderes Höhenniveau aufweisen, z. B. versetzt um einen entsprechenden Versatz. Der weitere Untergrund kann beispielsweise der Untergrund der Brückenplatte sein oder auch der Untergrund eines entsprechenden Auflagers der Brücke.

Am Brückenübergang bzw. allgemein am Übergang bzw. Wechsel des Untergrunds herrscht ein unterschiedliches Höhenniveau, wodurch der eben angesprochene Versatz entsteht. Das Angleichen der Ansätze wird derzeit weitestgehend manuell gelöst, und zwar in der Praxis mit Hilfe einer manuellen Umschaltung auf verschiedene Einzelsensoren des Messsystems, wie zum Beispiel des Big Sonic-Ski Systems bzw. des Super-Ski Systems. Hierbei wird die Nivellierung manuell so angepasst, dass bei einem Ansatz kein Absatz entsteht. Alternativ oder zusätzlich verwendet man ein Seil als Referenz, was circa 40 bis 50 m vor dem Ansatz gespannt und von dem Messsystem abgetastet wird, um einen "sauberen" Ansatz zu erhalten. Manuelle Anpassvorgänge sind nicht reproduzierbar, was Auswirkungen auf die Qualität haben kann, und erhöhen den Personalbedarf, was Auswirkungen auf die Personaleffizienz hat. Deshalb besteht der Bedarf an einem verbesserten Ansatz.

Aufgabe der vorliegenden Erfindung ist es, ein hinsichtlich Effizienz und Qualität verbessertes Konzept für die Nivellierung zu schaffen.

Die Aufgabe wird durch den Gegenstand in den unabhängigen Patentansprüchen gelöst.

Ausführungsbeispiele der vorliegenden Erfindung schaffen ein Nivelliersystem für einen Straßenfertiger mit einer Bohle. Das Nivelliersystem umfasst ein Messsystem sowie eine Steuerung. Das Messsystem weist zumindest zwei Sensoren auf, nämlich einen ersten und einen zweiten Sensor. Der erste Sensor ist in Fahrtrichtung vor dem zweiten Sensor angeordnet und ausgebildet, um einen ersten Abstand von dem ersten Sensor zu einem weiteren Untergrund mit einem um einen Versatz versetzten Höhenniveau (im Vergleich zu einem Untergrund) zu messen, um einen ersten Höhenwert zu erhalten, wobei der zweite Sensor in Fahrtrichtung vor der Bohle des Straßenfertigers angeordnet ist und ausgebildet ist, einen zweiten Abstand von dem zweiten Sensor zu einem Untergrund der Baumaschine oder eine Referenz der Baumaschine zu messen, um einen zweiten Höhenwert zu erhalten. Die Steuerung ist ausgebildet, ausgehend von dem ersten Höhenwert und dem zweiten Höhenwert den Versatz durch Differenzbildung zu bestimmen. Ferner ist die Steuerung ausgebildet, auf Basis des Versatzes einen Sollwert für das Angleichen zu bestimmen und die Bohle in Abhängigkeit des Sollwerts zu steuern.

Entsprechend Ausführungsbeispielen kann der Sollwert (oder auch Angleichs-Sollwert) unter Berücksichtigung eines Walzmaßes bestimmt werden. Hieraus ergibt sich dann entsprechend Ausführungsbeispielen die Berechnung wie folgt:

Sollwert für Höhenregelung $h_{Bsoll} = h_F + W$, wobei $h_F$ den gemessenen Versatz darstellt und W das Walzmaß.

Ausführungsbeispielen der vorliegenden Erfindung liegt die Erkenntnis zu Grunde, dass durch zwei "vordere" Sensoren der Untergrund vor dem Straßenfertiger so abgetastet werden kann, dass hieraus ein Versatz zwischen dem Untergrund und einem weiteren Untergrund, der sich auf einem anderen Höhenniveau befinden kann, bestimmbar ist. Bestimmbar heißt hierbei das Erkennen des Versatzes sowie auch das Bestimmen des Versatzes. Beispielsweise ermitteln zwei aufeinanderfolgende Sensoren ihren jeweiligen Abstand zu dem Untergrund, so dass durch Differenzbildung dieser zwei Sensoren der Versatz bestimmt werden kann. Unter Kenntnis des Versatzes kann vorteilhafterweise die Bohle so gesteuert werden, dass über eine Angleichsdistanz ein Übergang zu dem veränderten Höhenniveau hergestellt wird. Entsprechend Ausführungsbeispielen wird eine so genannte Angleichsgerade über die Angleichsdistanz verwendet.

Entsprechend Ausführungsbeispielen kann die Steuerung ausgebildet sein, die Bohle in Abhängigkeit der Angleichsgerade zu steuern, die sich über eine Angleichsdistanz und/oder eine vordefinierte Angleichsdistanz erstreckt. Entsprechend Ausführungsbeispielen ist die Angleichsgerade durch eine aktuelle Schichtdicke bestimmt und/oder durch eine Höhe des Versatzes an der Position und/oder den Sollwert bestimmt. So können also über die Angleichsgerade vorteilhafterweise Sollwerte für die Höhenregelung entlang der Angleichsgerade bestimmt werden, um ausgehend von diesen Sollwerten die Bohle zu steuern. Die Schichtdickenregelung kann ausgebildet sein, über die Angleichdistanz den Versatz auszuregeln. Hierzu vergleicht die Schichtdickenregelung z.B. die aktuelle (gemessene) Schichtdicke mit der Solldicke an der Position des Versatzes. Dieser Vorgang ist automatisierbar und dadurch reproduzierbar. Das erhöht vorteilhafterweise die Qualität des Übergangs. Durch die Länge der Angleichsdistanz kann so vorteilhafterweise der Übergang optimiert werden.

Entsprechend Ausführungsbeispielen ist sowohl das Bestimmen des Versatzes als auch das Erkennen des Versatzes gegebenenfalls unter Zuhilfenahme der Angleichsdistanz und/oder der Angleichsgerade dazu zu verwenden, um den Nivelliervorgang auch beim Übergang zu automatisieren. Dies erhöht die Personaleffizienz signifikant, da so kein manuelles Eingreifen mehr notwendig ist.

Entsprechend Ausführungsbeispielen kann die Steuerung ausgebildet sein, den Versatz im Untergrund zu erkennen; beispielsweise kann die Steuerung ausgebildet sein, den Versatz im Untergrund zu erkennen und den Angleich der Schichtdicke zu initiieren.

An dieser Stelle sei angemerkt, dass entsprechend Ausführungsbeispielen mehrere Sensoren anstelle des ersten Sensors und/oder mehrere Sensoren anstelle des zweiten Sensors eingesetzt werden können. Beispielsweise können die Höhenwerte über mehrere Sensoren für einen ersten Höhenwert bzw. eine erste Position gemittelt werden. Analog hierzu ist es auch möglich, dass mehrere Höhenwerte über mehrere Sensoren bzw. Positionen für den zweiten Höhenwert gemittelt werden. Alternativ wäre es auch denkbar, dass die Höhenwerte, das heißt also der erste Höhenwert und der zweite Höhenwert, jeweils durch die Verwendung einer so genannten Regressionsgerade bestimmt wird. Die Regressionsgerade hat den Vorteil, dass selbst bei Schrägstellung des Messsystems der Versatz zuverlässig bestimmbar ist.

Entsprechend Ausführungsbeispielen weist die Steuerung einen Ebenheitsregelkreis auf; und/oder ist ausgebildet, die Steuerung der Bohle unter Verwendung eines Vorhersagemodells und/oder unter Berücksichtigung eines Verhaltens der Bohle über die Zeit und/oder die Strecke durchzuführen. Die Steuerung ist ausgebildet, ausgehend von einer Differenz oder Summe einer Höhenreferenz sowie dem Sollwert oder ausgehend von einer Differenz oder Summe einer Höhenreferenz sowie dem Sollwert unter Berücksichtigung eines Walzmaßes zu steuern.

Entsprechend Ausführungsbeispielen ist die Steuerung ausgebildet, die Höhenwerte, ermittelt durch den einen oder die mehreren weiteren Sensoren, ab einer Position des Versatzes zu korrigieren, z.B. um den Versatz zu korrigieren. Entsprechend bevorzugten Ausführungsbeispielen wird als Messsystem ein Balken mit mehreren Sensoren verwendet. Vordere Sensoren bzw. die vordersten zwei Sensoren bilden den ersten und zweiten Sensor. Die in Fahrtrichtung dahinterliegenden Sensoren gehören ebenfalls zum Messsystem und werden beispielsweise für die Nivellierung bzw. den Ebenheitsregler verwendet.

Entsprechend Ausführungsbeispielen kann der Träger den ersten und zweiten Sensor tragen. Entsprechend weiteren Ausführungsbeispielen kann dieser Träger auch die weiteren Sensoren, die in Fahrtrichtung gesehen weiter hinten angeordnet sind, ebenso beherbergen. Entsprechend weiteren Ausführungsbeispielen kann der Träger sich auch über die Bohle hinaus hinter der Baumaschine mit weiteren Sensoren erstrecken bzw. kann das Messsystem durch einen weiteren Träger hinter der Baumaschine fortgesetzt werden. Dieser weitere Träger beherbergt dann analog zu dem sich hinter die Bohle erstreckenden Träger ein oder mehrere weitere Sensoren, die für die Schichtdickenbestimmung oder auch die Nivellierung bzw. den Ebenheitsregler verwendet werden können. Entsprechend Ausführungsbeispielen kann für den Ebenheitsregler bzw. die Schichtdickenbestimmung bzw. die Nivellierung der Sensorwert der vorderen Sensoren, wie zum Beispiel der einen oder mehreren weiteren Sensoren, oder der ersten und zweiten Sensoren um den Versatz korrigiert werden. Dies ermöglicht vorteilhafterweise, dass die Nivellierung/Schichtdickenbestimmung/Ebenheitsregelung auch über die Position des Versatzes, das heißt also beispielsweise über den Brückenübergang, fortgesetzt werden kann.

Ein weiteres Ausführungsbeispiel bezieht sich auf ein Verfahren zur Nivellierung. Das Verfahren umfasst die Schritte:

- Messen eines ersten Abstands von einem ersten Sensor zu einem weiteren Untergrund oder Oberfläche mit einem um einen Versatz versetzten Höhenniveau, wobei der erste Sensor in Fahrtrichtung vor dem zweiten Sensor angeordnet ist, um einen ersten Höhenwert zu erhalten;
- Messen eines zweiten Abstands von dem zweiten Sensor zu einem Untergrund der Baumaschine oder einer Referenz der Baumaschine, um einen zweiten Höhenwert zu erhalten;
- Bestimmen ausgehend von dem ersten Höhenwert und dem zweiten Höhenwert und Bestimmen auf Basis des Versatzes eines Sollwerts für einen Angleich; und
- Steuern der Bohle in Abhängigkeit des Sollwerts.

Entsprechend Ausführungsbeispielen kann das Verfahren natürlich auch computerimplementiert sein. Insofern wird ein Computerprogramm bzw. ein Datenträger umfassend ein Computerprogramm mit einem Programmcode geschaffen, der die Schritte, wie sie gerade im Verfahren definiert wurden, ausführt bzw. initiiert.

Weiterbildungen sind in den Unteransprüchen definiert. Ausführungsbeispiele der vorliegenden Erfindung werden nachfolgend anhand der Zeichnungen erläutert. Es zeigen:

Fig. 1a      eine schematische Darstellung einer Baumaschine, insbesondere eines Straßenfertiges, mit einem Messsystem zur Nivellierung gemäß Ausführungsbeispielen;

Fig. 1b/1c   schematische Vergrößerungsdarstellungen des Messsystems aus Fig. 1a;

Fig. 2       eine schematische Darstellung des Messsystems zur Verwendung beim Schichtdickenangleich gemäß Ausführungsbeispielen;

Fig. 3       eine schematische Darstellung einer Baumaschine mit einem Messsystem zur Verwendung gemäß Ausführungsbeispielen;

Fig. 4 ein schematisches Blockschaltbild zur Erläuterung von Regelkreisen bei der Schichtdickenregelung gemäß Ausführungsbeispielen; und

Fig. 5 eine schematische Darstellung zur Erläuterung der Schichtdickenregelung.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit gleichem Bezugszeichen versehen sind, so dass die Beschreibung derer aufeinander anwendbar bzw. austauschbar ist.

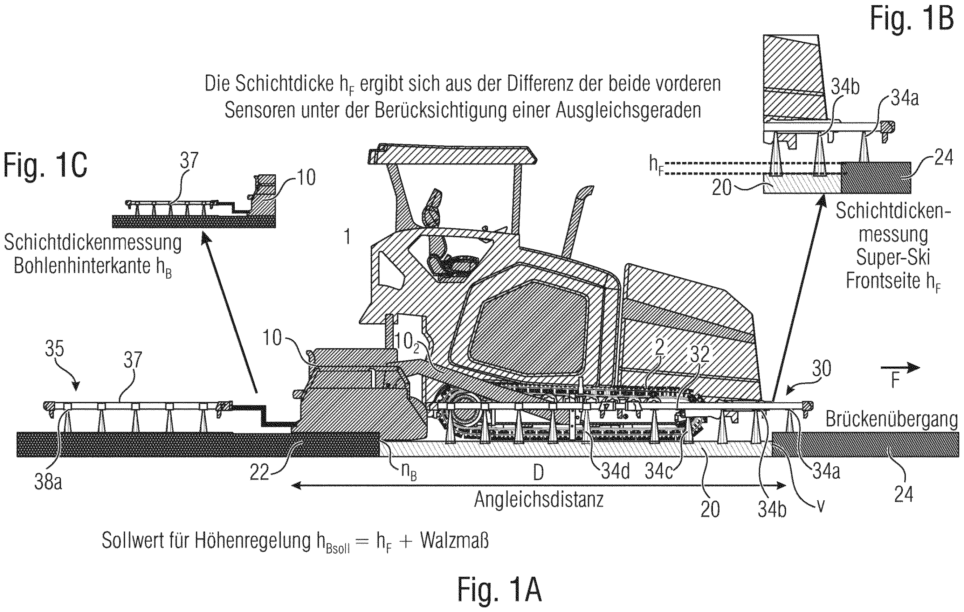

Fig. 1a zeigt einen Straßenfertiger 1 mit einer Bohle 10, die über einen Zugarm 10z durch den Straßenfertiger 1 bzw. einen Traktor gezogen wird. Der Straßenfertiger 1 fährt in Fahrtrichtung F mittels des Fahrwerks 2 auf einem Untergrund 20.

An dem Straßenfertiger 10 ist ein erster Teil 30 des Messsystems angeordnet. Dieser umfasst hier exemplarisch einen Träger 32 und mindestens zwei Sensorköpfe 34a und 34b. Darüber hinaus können in optionaler Weise an dem Träger 32 des Sensorsystemteils 30 noch ein oder mehrere weitere gleichartige Sensoren 34c, 34d, etc. angeordnet sein. Diese Sensoren 34a und 34b sind in Fig. 1b vergrößert dargestellt. Hierbei ist der Sensor 34a der vorderste Sensor oder zumindest vor dem Sensor 34b angeordnet. Der Sensor 34b ist zwischen der Bohle 10 und dem Sensor 34a angeordnet. Beide sind von dem Träger 32 auf den Untergrund 20 bzw. einen weiteren Untergrund 24 ausgerichtet.

In optionaler Weise sei darauf hingewiesen, dass das Sensorsystem noch einen weiteren Teil 35 mit einem weiteren Träger 37 und weiteren Sensoren 38a aufweisen kann (vgl. Fig. 1c). Der weitere Teil 35 des Messsystems ist hinter dem Straßenfertiger 1 angeordnet, während der erste Teil 30 des Sensorsystems vor bzw. seitlich auf Höhe des Fahrwerks 32 angeordnet ist. Bevorzugterweise ist der Träger 32 so ausgelegt, dass der Sensor 34a und/oder auch der Sensor 34b sich vor dem Straßenfertiger 1 befinden. Beispielsweise kann der Träger 32 am Zugarm 10z angeordnet sein.

Nachdem nun die Struktur des Straßenfertigers 1 erläutert wurde, wird nachfolgend kurz auf die Funktionsweise des Straßenfertigers 1 und die des Messsystems 30 eingegangen. Der Straßenfertiger 1 bewegt sich auf dem Untergrund 20 in Fahrtrichtung F und ist ausgebildet, mittels der Bohle 10 auf den Untergrund 20 eine Asphaltschicht 22 aufzutragen. Diese Asphaltschicht 22 weist aufgrund der Schichtdicke $h_B$ einen Höhenunterschied zu dem Untergrund 20 auf. Der Untergrund 20 ist typischerweise möglichst ebenerdig, wobei Unebenheiten durch ein so genanntes Nivelliersystem des Straßenfertigers 1 ausgeregelt werden. Das Nivelliersystem basiert beispielsweise auf den Sensoren des Sensorsystemteils 30. Unter manchen Bedingungen, z. B. bei Brückenübergängen, das heißt bei dem Übergang von herkömmlichen Straßenunterbaus 20 zu Brückenbereichen 24 kann es zu einem Versatz V kommen. Dieser Versatz ist beispielsweise dadurch geprägt, dass der weitere Untergrund 24 im Vergleich zu dem Untergrund 20 ein um den Versatz V versetztes Höhenniveau aufweist. Dieser Versatz V kann mittels der zwei Sensoren 34a und 34b, wobei der Sensor 34a als erster Sensor und der Sensor 34b als zweiter Sensor benannt ist, bestimmt werden. Beide Sensoren 34a und 34b sind ausgebildet, um einen Abstand, insbesondere eine Höhe von dem Sensor 34a bzw. 34b, zu dem jeweiligen Untergrund 20 und 24 zu bestimmen. Wie hier dargestellt, bestimmt der erste Sensor 34a den Abstand zu dem weiteren Untergrund 24, während der zweite Sensor 34b den Abstand zu dem Untergrund 20 bestimmt. Ausgehend von einer Differenz bzw. anhand einer Differenz in den resultierenden Höhenwerten (erster Höhenwert ermittelt durch den Sensor 34a und zweiter Höhenwert ermittelt durch den Sensor 34b) kann der Versatz V detektiert und auch bestimmt werden.

Das Messsystem umfasst hierzu entsprechend Ausführungsbeispielen eine Steuerung (nicht dargestellt), die den ersten und zweiten Höhenwert der Sensoren 34a und 34b erhält und durch Differenzbildung den Versatz bestimmt. Die Höhe des Versatzes ist mit $h_F$ gekennzeichnet. Die Höhe $h_F$ des Versatzes V und damit die anzupeilende Schichtdicke vor dem Versatz V ergibt sich z.B. aus der Differenz der beiden vorderen Sensoren 34a und 34b unter Berücksichtigung einer Angleichsgerade.

Entsprechend Ausführungsbeispielen kann ausgehend von diesem Versatz ein Sollwert $h_{Bsoll}$ für den Ort des Versatzes bestimmt werden. Dieser gibt die Schichtdicke der aufzutragenden Schicht an bzw. kurz vor der Position des Versatzes V an. Beim Sollwert kann entsprechend Ausführungsbeispielen auch noch ein Walzmaß mit berücksichtigt werden, dass beispielsweise der Sollwert zu reduzieren wäre. Hierdurch ergibt sich beispielsweise die Formel für den Sollwert der Höhenregelung

$$h_{Bsoll} = h_F + W,$$

wobei W das Walzmaß darstellt.

Die Steuerung ist ferner dazu ausgebildet, über die Angleichsdistanz D die Schichtdicke von $h_B$ an der Position der Bohle so zu variieren, dass an der Position des Versatzes der Sollwert $h_{Bsoll}$ erreicht wird.

Mittels der oben angesprochenen Angleichsgerade, welche im Prinzip eine Ausgleichsgerade darstellt, wird von der aktuellen Position der Bohle 10 bis zu der Position des Versatzes V die Höhenregelung angeglichen. Hierdurch ergeben sich also (Angleichs-)Sollwerte entlang der Angleichsgerade. Die Angleichsgerade verbindet möglichst kontinuierlich die aktuelle Schichtdicke $h_B$ an der aktuellen Position der Bohle mit der Schichtdicke $h_{Bsoll}$ an der bzw. kurz vor der Position des Versatzes. Beispielsweise kann der Versatz $h_F$ höher sein als die aktuelle Schichtdicke $h_B$, so dass die Angleichsgerade eine kontinuierliche Steigung aufweist. Hierdurch ergeben sich von Position zu Position zunehmende Sollwerte für die Schichtdicke. Natürlich kann $h_F$ auch kleiner $h_B$ sein, so dass entlang der Angleichsgerade die Sollwerte abnehmen.

Entsprechend einer ersten Variante kann davon ausgegangen werden, dass in dem hierzu nivellierenden Arbeitsgang auf den Bereich 24 keine weitere Schicht aufgebracht werden soll, so dass also exakt die Position des Versatzes bei der Höhenregelung angefahren werden soll (gegebenenfalls zur Berücksichtigung des Walzmaßes). In diesem Fall ist $h_{Bsoll}$ an der Position des Versatzes gleich $h_F$ bzw. gleich $h_F + W$.

Für den Fall (zweite Variante), dass in dem gleichen Arbeitsgang ab der Position des Versatzes V auf den Bereich 24 eine weitere Schicht aufgebracht werden soll, so kann $h_{Bsoll}$ an der Position des Versatzes nach oben korrigiert werden, nämlich um die Höhe der auf den Bereich 24 aufzubringenden Schicht.

Die Steuerung ist entsprechend Ausführungsbeispielen dazu ausgebildet, die Höhenregelung an der Position V entsprechend $h_{Bsoll}$ sowie gemäß weiteren Ausführungsbeispielen im Übergangsbereich gemäß der Angleichsgerade G durchzuführen. Dazu bestimmt die Steuerung die Sollwerte, z. B. kontinuierlich zunehmende (Angleichs-)Sollwerte bzw. kontinuierlich abnehmende (Angleichs-)Sollwerte über die Angleichsdistanz D bzw. entlang der Angleichsgerade G.

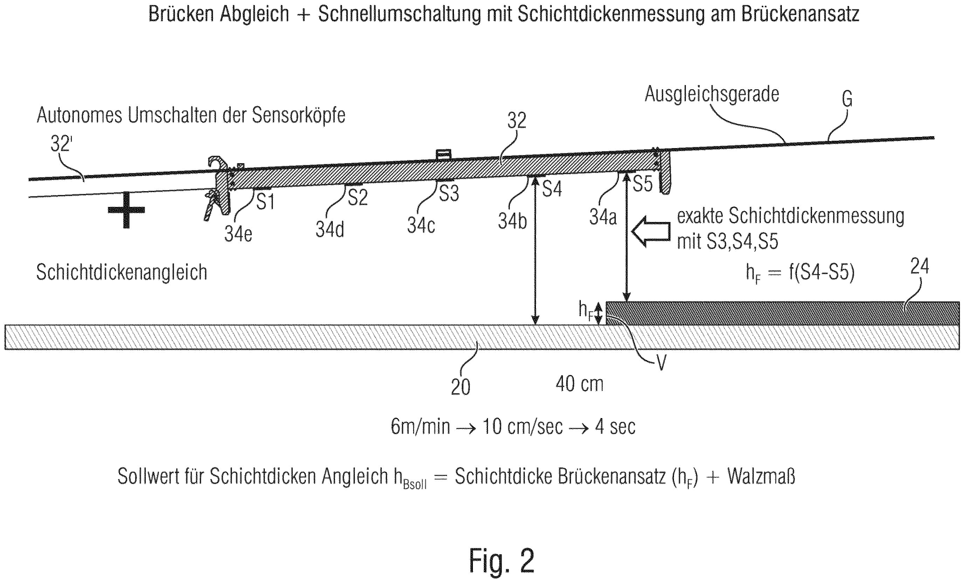

Fig. 2 zeigt das Messsystem 30 mit den Sensoren 34a, 34b, 34c, 34d und 34e. Diese sind an einem gemeinsam Träger 32 angeordnet. Dieser Träger 32 kann auch noch um ein weiteres Segment, wie durch 32' dargestellt ist, verlängert sein. Dieses weitere Segment 32' kann dann natürlich auch weitere Sensoren aufweisen.

Wie dargestellt, bildet das weitere Segment 32' zusammen mit dem Segment 32 einen Messbalken mit integrierten Sensoren 34a-34e usw. Alle Sensoren 34a-34e haben in diesem Ausführungsbeispiel gemein, dass sie vor der Bohle angeordnet sind und also den Untergrund 20 bzw. die bereits auf dem Untergrund angeordnete Schicht 24 bzw. den Versatz V der Schicht 24 zu der Schicht 20 bestimmen können. Der Versatz V bzw. die Höhe $h_F$ des Versatzes V ist als Funktion von den Sensorsignalen S4 und S5 der Sensoren 34b und 34a bestimmbar. Die Sensoren 34a-34e tasten den Untergrund 20 bzw. 24 kontinuierlich während der Fahrt ab. Hierzu sind die Sensoren 34a-34e jeweils voneinander beabstandet, z. B. mittels eines Abstands von 40 cm voneinander. Diese Kenntnis ermöglicht, dass so unterschiedliche Sensorwerte jeweils mit einem Sensor, z. B. dem Sensor 34a oder dem Sensor 34b zusammen verwendet werden können, um den Versatz V über eine Fläche abzutasten. Beispielsweise können so mehrere Sensorwerte S5 mit mehreren Sensorwerten S4 verrechnet werden.

Gemäß einem Ausführungsbeispiel ist eine Mittelung von zeitlich aufeinanderfolgenden Sensorwerten S5 für die Bestimmung des vorderen Sensorwerts S5 bzw. von zeitlich aufeinanderfolgenden Sensorwerten S4 für die Bestimmung des hinteren Sensorwerts S4 denkbar. In anderen Worten können diese beispielsweise über die Zeit abgetastet werden. Dadurch können kleine Unebenheiten herausgefiltert werden. Gerade für den hinteren Sensorwert könnte alternativ auch eine Mittelung über die Sensoren 34b-34e mit den Sensorsignalen S1 bis S4 erfolgen, um einen gemeinsamen Wert zu bestimmen.

Ferner ist es auch möglich, den Sprung bzw. die Position des Sprungs genau zu detektieren. Durch Abgleich der Sensorwerte S5 und S4 vor dem Sprung kann auch ein Offset zwischen diesen zwei Sensorwerten ermittelt werden, der sich aus der hier dargestellten schrägen Anordnung des Messbalkens 32 bzw. 32' ergibt. Auch wäre es denkbar, dass anhand der Veränderung der Sensorwerte S5 beim Überfahren des Versatzes V der Brückenansatz V bzw. allgemein der Versatz detektiert wird. Der Detektionsalgorithmus hierzu kann beispielsweise einen Versatz V dann erkennen, wenn im Wesentlichen gleichbleibende Sensorwerte S5 ab einer Position direkt auf ein anderes Höhenniveau springen, so dass ab dieser Position dann die Sensorwerte wiederum im Wesentlichen gleich bleiben. Hierzu werden die Sensorsignale S5 über die Zeit ausgewertet. Diese Erkennung des Versatzes V kann dann zu einer Schnellumschaltung führen, so dass dann ein Angleich bzw. automatischer Angleich der Schichtdicke an den Versatz V erfolgt. Alternativ kann die Höhenmessung $h_F$ unter Verwendung der Sensorsignale S1, S2 und S3, der Sensoren 34e, 34d und 34c verbessert werden, indem die Steigung des Trägers 32 bzw. 32', z. B. unter Verwendung einer Regressionsgerade, bestimmt wird.

Entsprechend weiteren Ausführungsbeispielen können zwei Regressionsgeraden, nämlich eine zur Bestimmung eines Höhenwerts gegenüber dem Untergrund 20 und eine zur Bestimmung eines Höhenwerts zum Untergrund 24 ermittelt werden. Diese zwei Regressionsgeraden können unter Verwendung mehrerer Sensorwerte, z. B. der Sensorwerte S1, S2, S3 und S4 für die hintere Regressionsgerade bestimmt werden. Zur Bestimmung der vorderen Regressionsgerade wäre es denkbar, dass mehrere (z.B. zwei) zueinander versetzte Sensoren Einsatz finden. Entsprechend einem Ausführungsbeispiel ist die Angleichsgerade G parallel zu der hinteren Regressionsgeraden.

Ausgehend von der Erkennung des Versatzes V können also entsprechend Ausführungsbeispielen zwei Dinge erfolgen. Entsprechend einer ersten Variante kann der Modus zum Angleichen der Schichtdicke aktiviert werden. Ein exemplarischer Modus wird unten erläutert. Entsprechend einem Ausführungsbeispiel kann dann eine Schichtdickenmessung am Brückenansatz erfolgen, um diese Schichtdickenmessung, das heißt also die Messung des Versatzes $h_F$ an der Position V, für den Angleich zur Verfügung zu stellen. Entsprechend einem weiteren Ausführungsbeispiel wäre es denkbar, dass ein autonomes Umschalten der Sensorköpfe 34a-34e ab der Position V erfolgt, so dass diese weiterhin für die Nivellierung eingesetzt werden, allerdings korrigiert um den Versatz $h_F$. Hierbei kann beispielsweise die Korrektur mittels einer Art Offset erfolgen. Unter Kenntnisnahme der Abschnitte der Sensorköpfe, z. B. 40 cm voneinander, ist unter Verwendung der aktuellen Fahrgeschwindigkeit, z. B. 6 m pro Minute, was in etwa 10 cm pro Sekunde entspricht, das Umschalten der nachfolgenden Sensoren 34b-34e möglich. Die 40 cm werden nach etwa 4 s erreicht, so dass dann alle 4 s ein weiterer Sensor 34b, 34c entsprechend umzuschalten wäre.

Ausgehend von der aktuellen Schichtdicke sowie des ermittelten Versatzes $h_F$ kann entsprechend Ausführungsbeispielen das Angleichen wie folgt erfolgen. Es kann zwischen diesen zwei Punkten eine Angleichsgerade G bestimmt werden, die Sollwerte über die Angleichsdistanz D vorgibt. Die Sollwerte können beispielsweise zunehmen, wenn $h_F$ größer als die aktuelle Schichtdicke ist, oder abnehmen, wenn $h_F$ kleiner als die aktuelle Schichtdicke ist. Hierbei ist auch noch zu berücksichtigen, ob ab der Position V die Schicht auf den Untergrund 24 weiter aufgebracht werden soll, oder ob die aufzubringende Schicht 22 direkt an 24 anschließen soll. In diesem Fall wird entsprechend Ausführungsbeispielen auch das Walzmaß berücksichtigt, so dass als Sollwert für die Schichtdicke beim Angleich $h_{Bsoll}$ an der Position V die Schichtdicke am Brückenansatz $h_F$ sowie das Walzmaß W verwendet wird. Exkurs zum Walzmaß: Bei einem nachgelagerten Arbeitsgang wird beim Walzen die Schichtdicke um das Walzmaß beispielsweise reduziert.

Hieraus ergibt sich also die Formel $h_{Bsoll} = h_F +$ W. Dieser Sollwert $h_{Bsoll}$ wird dann zusammen mit dem aktuellen Sollwert an der Position der Bohle dazu verwendet, um die Angleichsgerade G und die abhängig von der Angleichsgerade G ermittelbaren Sollwerte zu bestimmen. Der Straßenfertiger kann dann die Bohle 10 entsprechend diesen Sollwerten steuern, um über die Angleichsdistanz D den Angleich durchzuführen.

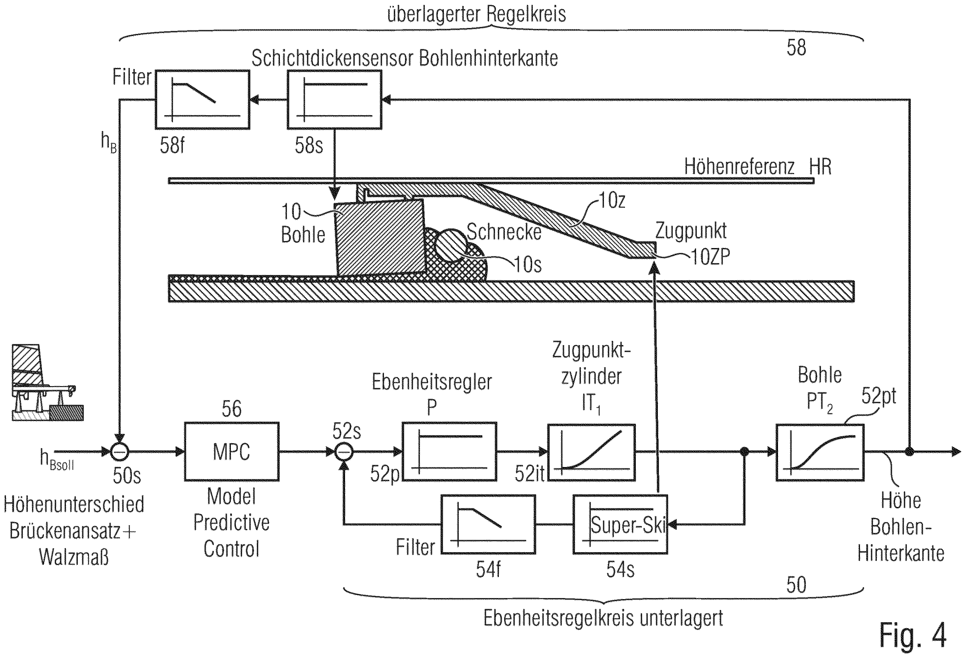

Exkurs zur Regelung wie sie z.B. in Fig 4 erläutert wird: Bei Verwendung einer entsprechenden Regelschleife ist das Bestimmen der Angleichsgerade G nicht separat notwendig, da der Regelkreis über die Distanz D (von Bohlenposition zu Versatzposition) den Angleich der Höhenwerte entlang der Geraden G durchführt.

An dieser Stelle sei angemerkt, dass die Angleichsgerade G entsprechend Ausführungsbeispielen parallel zu dem Träger 32 bzw. 32' verläuft.

Bei obigen Ausführungsbeispielen war davon ausgegangen, dass der Versatz durch ein Brückenansatz resultiert. Im Bereich diese Brückenansatzes kann beispielsweise die Dehnungsfuge der Brücke angeordnet sein. Diese gibt durch zusätzliche Elemente, z. B. Metallteile, die Höhe von 24 vor. Alternativ zu einem Brückenansatz kann es sich bei dem Versatz V auch um einen Ansatz zu einer anderen Asphaltschicht, z. B. im Falle der Reparatur einer Asphaltschicht (herzustellenden und vorhandene Asphaltschicht Stoß an Stoß (in Fahrtrichtung des Straßenfertigers)) handeln.

Nachfolgend wird bezugnehmend auf Fig. 4 die Steuerung der Bohle erläutert. Die Steuerung kann einen Ebenheitsregelkreis 50 aufweisen, der die drei in Serie geschalteten Regler P zur Ebenheitsregelung, $IT_1$ zur Verstellung des Zugpunktzylinders und $PT_2$ zur Modullierung der Bohle umfasst. Diese Elemente sind mit 52P, 52IT und 52PT versehen. Ausgehend von dieser Serienkette 52P, 52IT und 52PT kann auch noch eine Feedbackschleife 54 mit dem Super-Ski-Regler 54s und einem Filter 54f vorgesehen sein. Diese Feedbackschleife gibt das Signal des IT-Reglers zurück, prozessiert es mit dem jeweiligen Algorithmus 54s bzw. der jeweiligen Filterung 54f, um dann am Eingang des Reglers 52P durch ein Subtraktionsglied 52s wieder dem Ebenheitsregler 52P zugeführt zu werden. Mittels des Ebenheitsreglers 52P wird unter Berücksichtigung der Zugpunktverstellung IT und des Bohlenverhaltens PT die Höhe der Bohlenhinterkante ausgehend von einer Soll-Höhe am Eingang des Ebenheitsreglers durchgeführt. In dieser Feedbackschleife 54s und 54f kann dann eine weitere Regelung überlagert werden, die langwellige Unebenheiten minimiert. Zusätzlich kann auch noch ein sogenanntes "model-predictive control" 56 vorgesehen sein, der dem Ebenheitsregler 50 vorgelagert ist. Dieses "model-predictive control" umfasst ein Vorhersagemodell zur Berücksichtigung von zu erwartenden Reaktionen der Bohle ausgehend von der gewünschten Änderung. Beispielsweise kann das Aufschwimmverhalten so mitberücksichtigt werden, das sich in Folge von Anstellwinkeländerung oder Zugpunktverstellungen ergibt. Darüber hinaus kann das "model-predictive control" 56 auch Faktoren, wie z. B. die vorzuhaltende Asphaltmenge bei der Schnecke 10s oder auch Bohlenparameter, wie z. B. Vibration der Bohle 10, mitberücksichtigen.

Diese Regelkette umfassen 56 als optionalen Bestandteil und 50 wirkt auf die Zugpunktverstellung 10zp des Zugarms 10z der Bohle 10. Ziel ist es hierbei, die Bohle 10 entlang der Höhenreferenz $h_R$ zu führen.

Hierzu kann entsprechend weiteren Ausführungsbeispielen ein weiterer Regelkreis 58 überlagert werden. Dieser stellt eine Feedbackschleife am Ausgang von 52PT zum Eingang von 56 dar. Am Eingang 56 ist wiederum ein Subtraktionspunkt 56s vorgesehen. Der überlagerte Regelkreis 58 ist dazu ausgebildet, mittels des Schichtdickensensors an der Bohlenhinterkante (vgl. Sensorik 35 aus Fig. 1a bzw. 1c) zu steuern. Hierdurch erfolgt die Nivellierung nach dem Prinzip mit dem überlagerten Regelkreis 58.

Mittels der Sensoren 38a ff., die am Teil 35 des Messsystems angeordnet sind, wird unter Berücksichtigung der Sensorsignale der Sensoren 34a ff. des Messsystemteils 30 eine Schichtdicke $h_B$ an der Position der Bohle bestimmt. Hierzu kann eine einfache Differenzbildung verwendet werden oder auch eine Bestimmung mit zwei Regressionsgeraden erfolgen.

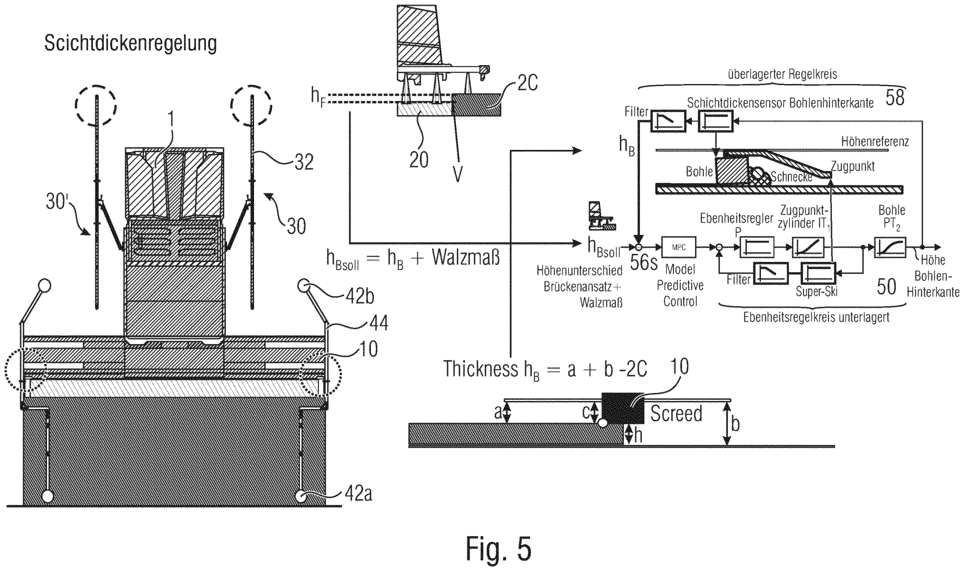

Die weitere einfache Variante der Schichtdickenbestimmung ist in Fig. 5 gezeigt. Hier wird an der Bohle 10 ein Höhenwert a hinter der Bohle, z. B. mittels des Sensors 42a, und ein Höhenwert b vor der Bohle, z. B. mittels des Sensors 42b, bestimmt. Eine Summe dieser Werte A+B wird die Anbringungshöhe C des Messsystems abgezogen, um die Schichtdicke $h_B$ zu bestimmen. Hieraus ergibt sich die folgende Formel: $h_B = A+B-2C$. Entsprechend einem Ausführungsbeispiel kann die Schichtdicke $h_B$ bei dieser Variante durch ein eigenes Schichtdickenmesssystem umfassend die Sensoren 42a und 42b, die an einem Träger 44 angebracht sind, verwendet werden. Der Träger 44 ist mit der Bohle 10 verbunden.

Alternativ wird mittels der vorderen Sensoren 34a und 34b eine erste Regressionsgerade bestimmt, während mittels eines hinteren Sensors 38a ff. eine zweite Regressionsgerade bestimmt wird. Der Abstand dieser zwei Regressionsgeraden voneinander gibt Auskunft über die Schichtdicke $h_B$ an der Position der Bohle. Dieser Messwert wird dann unter Verwendung der Regler 58s zur Bestimmung der Schichtdicke an der Bohlenhinterkante und eines optional nachgelagerten Filters 58f dem Regelkreis zugeführt, nämlich über den Subtraktionspunkt 50s. Hier wird der aktuelle Schichtdickenwert $h_B$ mit dem Sollwert $h_{Bsoll}$ verglichen.

Ausgehend von dem im Zusammenhang mit Fig. 2 bestimmten Versatz $h_F$ kann der Wert $h_{Bsoll}$ an der Position des Versatzes sowie auch die Sollwerte entsprechend $h_{Bsoll}$ entlang der Angleichsgeraden bestimmt werden. Diese werden dem Regelkreis über den Subtraktionspunkt 50s zugeführt. Somit kann also unter Berücksichtigung von $h_{Bsoll}$ die Höhe an der Bohlenhinterkante zum Angleich geregelt werden. Das ist noch einmal im Detail anhand von Fig. 5 dargestellt. Fig. 5 zeigt die überlagerten Regelkreise 50 und 58 zur Steuerung der Höhe an der Bohlenhinterkante, wobei über den Regelkreis 58 ein Höhenwert $h_B$ an der Bohlenhinterkante zugeführt wird und über den Subtraktionspunkt 56s der $h_B$-Sollwert für den Versatz V zwischen den Schichten 20 und 24 zugeführt wird. Wie hier dargestellt, kann beispielsweise die Schichtdickenmesswerte $h_B$ von dem Messsystem mit den Sensoren 42a und 42b, während der Versatz $h_F$ mittels des Messsystems 30 bestimmt wird.

Entsprechend Ausführungsbeispielen kann das Schichtdickenmesssystem mit den Sensoren 42a und 42b sowohl auf der einen Seite als auch auf der anderen Seite oder auch auf beiden Seiten der Bohle 10 angeordnet sein. Entsprechend Ausführungsbeispielen ist es ebenso möglich, dass der Versatz $h_F$ sowohl auf der einen Seite als auch auf der anderen Seite der Baumaschine 1 bestimmt wird. Exemplarisch ist hier in Fig.

5 ein weiteres Messsystem 30' auf Höhe des Traktors vorgesehen. Unter Verwendung der parallel angeordneten Messsysteme kann der Versatz V auf beiden Seiten (links und rechts) der Baumaschine 1 ermittelt werden.

Entsprechend Ausführungsbeispielen ist es also möglich, dass unter Verwendung des Messsystems 30 oder 30', das Sensoren vor (in Fahrtrichtung gesehen) der Bohle 10 oder bevorzugterweise sogar vor der Baumaschine 1 umfasst, eine Sollschichtdickenermittlung am Brückenansatz (oder vergleichbaren Konstruktionen) durchzuführen. Der Angleich erfolgt entsprechend weiterer Ausführungsbeispiele entsprechend einer Angleichsgerade. Die Berechnungseinheit ist ausgebildet, eine derartige Angleichsgerade kontinuierlich zu berechnen. Die Steuerung, wie sie beispielsweise auch im Super-Ski System eingesetzt wird, umfasst zur Berechnung der Angleichsgerade die Elemente 56, 54s und 54f zusammen mit den Reglern 52p, 52it und 52pt. Insofern kann entsprechend Ausführungsbeispielen die in Fig. 5 dargestellte Steuerung Angleich entlang der Angleichsgeraden G (vgl. Fig. 2) über die Angleichsdistanz D direkt durchführen und zwar auf Basis von den zwei bestimmten Werten $h_B$ (= Schichtdicke an der Bohle 10) und $h_{Bsoll}$ (mit und/oder ohne Berücksichtigung eines Walzmaßes; = Höhe des Versatzes V). Hier werden z.B. das entsprechende Bohlenverhalten über die Zugpunktverstellung und die Vorhersagemodelle entsprechend mit berücksichtigt. Entsprechend Ausführungsbeispielen ist D abhängig von der Länge bzw. dem Abstand der Sensoren 34a und/oder 34b im Vergleich zu dem Regelungspunkt der Bohle 10. In Fig. 2 wurde exemplarisch die Angleichsdistanz D als Abstand zwischen dem Sensor 34a und der Bohlenhinterkante gesehen. Entsprechend Ausführungsbeispielen kann dieser Abstand D aber auch je nach Verstellpunkt der Bohle variieren.

Entsprechend Ausführungsbeispielen ist es möglich, dass der vorderste Sensor 34a bzw. die vordersten Sensoren 34a, 34b im Messsystem, wie zum Beispiel dem Super-Ski System, einerseits die Versatzhöhe $h_F$ am Brückenansatz V ermittelt und zugleich den Prozess vom autonomen Angleichen der Schichtdicke initiiert.

Wie bereits erläutert, kann bei Erkennen des Versatzes V bzw. unter Kenntnis des Versatzes $h_F$ für eine optimale Ebenheitsregelung diejenigen Sensoren 34a, 34b, 34c, usw., die den Brückenansatz V erreicht haben, im System unter Berücksichtigung von $h_F$ abgeglichen werden, so dass sie wieder zur Ebenheitsregelung mit eingesetzt werden können.

Nachfolgend wird ein potenzielles Messsystem erläutert, das einerseits die Bestimmung von $h_F$ an der Position des Versatzes ermöglicht und andererseits auch gleichzeitig für die Ebenheitsregelung/Nivellierung sowie Schichtdickenbestimmung eingesetzt werden kann.

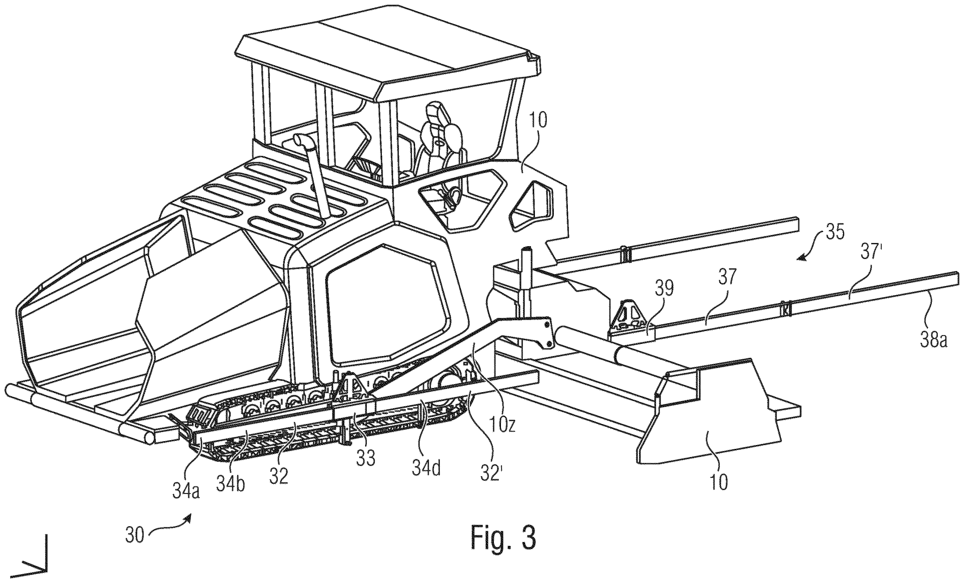

Fig. 3 zeigt eine Baumaschine 1 mit einer Bohle 10 und einem vor der Bohle 10 angeordneten Messsystem 30. Das Messsystem 30 ist am Zugarm 10z angeordnet und umfasst einen Träger 32 sowie einen verlängerten Träger 32'. Jeder kann einen oder mehrere Sensoren umfassen. Rein exemplarisch sind hier die Sensoren 34a, 34b und 34d dargestellt. Die Träger 32 und 32' sind über eine Befestigungseinheit 33 mit dem Zugarm 10z verbunden. Alle Sensoren 34a bis 34d befinden sich vor der Bohle, wobei der erste Sensor, das heißt also der in Fahrtrichtung gesehen vorderste Sensor, der Sensor 34a ist. Die Sensoren 34a und 34b ermitteln beispielsweise den Versatz. Alle Sensoren 34a bis 34d können für die Ebenheitsregelung verwendet werden. Ferner können die Sensoren 34a bis 34d als Sensoren des Schichtdickenmesssystems genutzt werden; das erfolgt z.B. über die Ermittlung einer Regressionsgerade oder auch über die Mittelung der Sensorwerte (vgl. Sensorwert B aus Fig. 5). Darüber hinaus umfasst das Messsystem noch den hinter der Bohle angeordneten Teil 35. Dieser umfasst beispielsweise zwei Träger 37 und 37', die über eine Verbindung 39 mit der Bohle verbunden sind und auch direkt miteinander verbunden sind. An den Trägern 37 sind wiederum Sensoren 38a angeordnet, die einen Höhenwert hinter der Bohle bestimmen. Die Sensorwerte vor der Bohle können zusammen mit den Sensorwerten hinter der Bohle einerseits für die Nivellierung/Ebenheitsregelung und vor allem für die Schichtdickenmessung verwendet werden.

Wie hier dargestellt, kann entsprechend Ausführungsbeispielen das Sensorsystem umfassend die zwei Teile 32 und 35 sowohl auf der einen Seite (z. B. rechts) als auch auf der anderen Seite (z. B. links) vorgesehen sein.

Wie bereits oben erläutert, kann sowohl das Messsystem 35 als auch das Messsystem 30 mehrere Sensoren umfassen, die z. B. unter Verwendung einer Regressionsgerade oder einer Mittelung zusammen berücksichtigt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Nivelliersystem für einen Straßenfertiger (1) mit einer Bohle (10), umfassend:

   ein Messsystem (30);
   sowie eine Steuerung;
   wobei das Messsystem (30) einen ersten und einen zweiten Sensor aufweist, wobei der erste Sensor (34a) in Fahrtrichtung vor dem zweiten Sensor (34b) angeordnet ist und ausgebildet ist, um einen ersten Abstand von dem ersten Sensor (34a) zu einem weiteren Untergrund oder Oberfläche mit einem um einen Versatz (V) versetzten Höhenniveau zu messen, um einen ersten Höhenwert zu erhalten; und wobei der zweite Sensor (34b) in Fahrtrichtung vor der Bohle (10) des Straßenfertigers (1) angeordnet ist und ausgebildet ist, einen zweiten Abstand von dem zweiten Sensor (34b) zu einem Untergrund der Baumaschine oder einer Referenz der Baumaschine zu messen, um einen zweiten Höhenwert zu erhalten;
   wobei die Steuerung ausgebildet ist, um ausgehend von dem ersten Höhenwert und dem zweiten Höhenwert durch Differenzbildung den Versatz (V) zu bestimmen, wobei die Steuerung ferner ausgebildet ist, um auf Basis des Versatzes (V) einen Sollwert für einen Angleich zu bestimmen;
   wobei die Steuerung ausgebildet ist, die Bohle (10) in Abhängigkeit des Sollwerts zu steuern.

2. Nivelliersystem gemäß Anspruch 1, wobei der Sollwert unter Berücksichtigung eines Walzmaßes bestimmt wird.

3. Nivelliersystem gemäß einem der vorherigen Ansprüche, wobei die Steuerung ausgebildet ist, die Bohle (10) in Abhängigkeit einer Angleichsgerade zu steuern, die sich über eine Angleichsdistanz und/oder eine vordefinierte Angleichsdistanz erstreckt.

4. Nivelliersystem gemäß Anspruch 3, wobei die Angleichsgerade durch eine aktuelle Schichtdicke bestimmt ist und/oder wobei die Angleichsgerade durch eine Sollschichtdicke an der Position des Versatzes (V) und/oder den Sollwert bestimmt ist.

5. Nivelliersystem gemäß einem der vorherigen Ansprüche, wobei der erste Höhenwert und/oder der zweite Höhenwert über einen oder mehrere Sensoren und/oder eine oder mehrere Positionen ermittelt wird.

6. Nivelliersystem gemäß einem der vorherigen Ansprüche, wobei der erste Höhenwert und unter Verwendung einer ersten Regressionsgerade bestimmt wird und/oder wobei der zweite Höhenwert und unter Verwendung einer zweiten Regressionsgerade bestimmt wird.

7. Nivelliersystem gemäß einem der vorherigen Ansprüche, wobei die Steuerung ausgebildet ist, den Versatz (V) im Untergrund zu erkennen; oder wobei die Steuerung ausgebildet ist, den Versatz (V) im Untergrund zu erkennen und den Angleich der Schichtdicke zu initiieren.

8. Nivelliersystem gemäß einem der vorherigen Ansprüche, wobei die Steuerung einen oder mehrere überlagerte Regelkreise aufweist.

9. Nivelliersystem gemäß Anspruch 8, wobei die Steuerung einen Ebenheitsregelkreis aufweist; und/oder
wobei die Steuerung ausgebildet ist, die Steuerung der Bohle (10) unter Verwendung eines Vorhersagemodells und/oder unter Berücksichtigung eines Verhaltens der Bohle (10) über die Zeit und/oder die Strecke durchzuführen.

10. Nivelliersystem gemäß Anspruch 8 oder 9, wobei die Steuerung ausgebildet ist, ausgehend von einer Differenz oder Summe einer Höhenreferenz sowie dem Sollwert oder ausgehend von einer Differenz oder Summe einer Höhenreferenz sowie dem Sollwert unter Berücksichtigung eines Walzmaßes zu steuern.

11. Nivelliersystem gemäß einem der vorherigen Ansprüche, wobei das Messsystem (30) einen oder mehrere weitere Sensoren zwischen dem zweiten Sensor (34b) und der Bohle (10) für eine Nivellierung und/oder eine Schichtdickenbestimmung und/oder einen Ebenheitsregler aufweist; und/oder wobei das Messsystem (30) einen oder mehrere weitere Sensoren hinter einer Bohle (10) für eine Nivellierung und/oder eine Schichtdickenbestimmung und/oder einen Ebenheitsregler aufweist.

12. Nivelliersystem gemäß Anspruch 11, wobei die Steuerung ausgebildet ist, die Höhenwerte, ermittelt durch den einen oder die mehreren weiteren Sensoren, ab einer Position des Versatzes (V) zu korrigieren und/oder um den Versatz (V) zu korrigieren.

13. Nivelliersystem gemäß einem der vorherigen Ansprüche, wobei das Messsystem (30) einen Träger aufweist, an welchem der erste und zweite Sensor oder der erste und zweite Sensor sowie ein oder mehrere weiteren Sensoren angeordnet sind.

14. Verfahren zum Betreiben eines Nivelliersystems für einen Straßenfertiger (1) mit einer Bohle (10), umfassend die Schritte:

   Messen eines ersten Abstands von einem ersten Sensor (34a) zu einem weiteren Untergrund oder Oberfläche mit einem um einen Versatz (V) versetzten Höhenniveau, wobei der erste Sensor (34a) in Fahrtrichtung vor dem zweiten Sensor (34b) angeordnet ist, um einen ersten Höhenwert zu erhalten;
   Messen eines zweiten Abstands von dem zweiten Sensor (34b) zu einem Untergrund der Baumaschine oder einer Referenz der Baumaschine, um einen zweiten Höhenwert zu erhalten;
   Bestimmen ausgehend von dem ersten Höhenwert und dem zweiten Höhenwert und Bestimmen auf Basis des Versatzes (V) eines Sollwerts für einen Angleich; und
   Steuern der Bohle in Abhängigkeit des Sollwerts.

15. Computerprogramm mit einem Programmcode zur Durchführung der Schritte nach dem Verfahren aus Anspruch 14.

EP 4 667 657 A1

**Fig. 1B**

Die Schichtdicke $h_F$ ergibt sich aus der Differenz der beide vorderen Sensoren unter der Berücksichtigung einer Ausgleichsgeraden

34b
34a
$h_F$
24
20

Schichtdickenmessung
Super-Ski
Frontseite $h_F$

**Fig. 1C**

37
10

Schichtdickenmessung
Bohlenhinterkante $h_B$

1

35
37
10
$10_2$
2  32
30
F

38a
22
$n_B$
D
34d  34c
34a
24
20  34b  v

Angleichsdistanz

Brückenübergang

Sollwert für Höhenregelung $h_{Bsoll} = h_F$ + Walzmaß

**Fig. 1A**

Fig. 2

Fig. 3

EP 4 667 657 A1

überlagerter Regelkreis 58

Schichtdickensensor Bohlenhinterkante

Höhenreferenz HR

Zugpunkt 10ZP

10z

Schnecke 10s

10 Bohle

58s

Filter 58f

$h_B$

Fig. 4

Höhe Bohlen-Hinterkante

Bohle $PT_2$ 52pt

Zugpunkt-zylinder $IT_1$

52it

Ebenheitsregler P

52p

52s

50s

Super-Ski 54s

Filter 54f

Ebenheitsregelkreis unterlagert 50

MPC 56

Model Predictive Control

$h_{Bsoll}$

Höhenunterschied Brückenansatz + Walzmaß

Scichtdickenregelung

$h_{Bsoll} = h_B + \text{Walzmaß}$

Thickness $h_B = a + b -2C$

EP 4 667 657 A1

Fig. 5

**EUROPÄISCHER RECHERCHENBERICHT**

Europäisches Patentamt
European Patent Office
Office européen des brevets

Nummer der Anmeldung

EP 24 18 2579

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 712 328 B1 (MOBA MOBILE AUTOMATION AG [DE]) 23. November 2022 (2022-11-23) | 1-3,5-15 | INV. E01C19/48 |
| Y | * das ganze Dokument * ----- | 2,3,8,10 | |
| Y | US 2021/222379 A1 (BUSCHMANN MARTIN [DE] ET AL) 22. Juli 2021 (2021-07-22) * das ganze Dokument * ----- | 2,10 | |
| X | US 11 060 245 B1 (BRENNER MARK W [US] ET AL) 13. Juli 2021 (2021-07-13) | 1,5,7,9,14 | |
| Y | * das ganze Dokument * ----- | 3,4 | |
| Y | US 7 856 302 B2 (CATERPILLAR INC [US]) 21. Dezember 2010 (2010-12-21) * das ganze Dokument * ----- | 3,4 | |
| Y | WO 2021/151511 A1 (MOBA MOBILE AUTOMATION AG [DE]) 5. August 2021 (2021-08-05) * das ganze Dokument * ----- | 8 | |

**RECHERCHIERTE SACHGEBIETE (IPC)**

E01C

Der vorliegende Recherchenbericht wurde für alle Patentansprüche erstellt

| Recherchenort | Abschlußdatum der Recherche | Prüfer |
|---|---|---|
| München | 3. Dezember 2024 | Kerouach, May |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 18 2579

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-12-2024

| Im Recherchenbericht angeführtes Patentdokument | Datum der Veröffentlichung | Mitglied(er) der Patentfamilie | Datum der Veröffentlichung |
|---|---|---|---|
| EP 3712328 B1 | 23-11-2022 | KEINE | |
| US 2021222379 A1 | 22-07-2021 | BR 102021000747 A2 | 27-07-2021 |
| | | CN 113136772 A | 20-07-2021 |
| | | CN 216141851 U | 29-03-2022 |
| | | EP 3851584 A1 | 21-07-2021 |
| | | JP 2021113490 A | 05-08-2021 |
| | | PL 3851584 T3 | 20-03-2023 |
| | | US 2021222379 A1 | 22-07-2021 |
| US 11060245 B1 | 13-07-2021 | US 9963836 B1 | 08-05-2018 |
| | | US 11060245 B1 | 13-07-2021 |
| US 7856302 B2 | 21-12-2010 | CN 1986970 A | 27-06-2007 |
| | | DE 102006053388 A1 | 28-06-2007 |
| | | US 2007150148 A1 | 28-06-2007 |
| WO 2021151511 A1 | 05-08-2021 | CN 115917245 A | 04-04-2023 |
| | | EP 4097418 A1 | 07-12-2022 |
| | | EP 4220070 A1 | 02-08-2023 |
| | | EP 4224112 A2 | 09-08-2023 |
| | | US 2022364338 A1 | 17-11-2022 |
| | | WO 2021151511 A1 | 05-08-2021 |

EPO FORM P0461

Für nähere Einzelheiten zu diesem Anhang : siehe Amtsblatt des Europäischen Patentamts, Nr.12/82